# EUROPEAN PATENT SPECIFICATION

(11) **EP 1 344 715 B1**
(45) Date of publication and mention of the grant of the patent: **14.05.2008**
(21) Application number: 02005876.4
(22) Date of filing: 14.03.2002
(51) Int. Cl.: B62M 11/16

(54) **Hub transmission for a bicycle**
Fahrradantriebsnabe
Moyeu d'entraînement de bicyclette

(43) Date of publication of application: 17.09.2003
(73) Proprietor: SHIMANO INC., Osaka 590-8577 (JP)
(72) Inventor: Shoge, Akihiko, Yamaguchi 750-1101 (JP)
(74) Representative: Wallinger, Michael

(56) References cited:
- EP-A- 0 531 608
- EP-A- 1 132 287

## Description

The present invention relates to bicycle transmissions and more particularly to an internal bicycle hub transmission having three or more speeds.

An internally mounted bicycle transmission is disclosed for example in US Patent No. 3,937,309. The internal hub includes a hub axle, a drive member rotatably mounted about the hub axle, a hub body and a planetary gear mechanism coupled between the drive member and the hub body for transmitting rotational force from the drive member to the hub body through multiple rotational force transmission paths. The planetary gear mechanism includes a planet gear supported by a planet gear rack and a ring gear engaging the planet gear. The transmission provides three speeds depending on the axial position of a clutch coupled to the drive member.

The European Patent EP 0 531 608 , which is considered the closest pior art, Discloses a further multi-speed hub transmission with up to 7-speeds by which two planetary gear mechanisms are provided, each including a set of planet gears and a corresponding ring gear. With an increasing number of gear speeds, an increasing number of clutches is necessary for transferring the drive force through the associated sun gears, planet gears and ring gears and finally to the hub body. In some cases, the axial length of the ring gear must be larger and/or the mechanical loads on the ring gear is uneven or irregular, such that an undesirable wobbling or imbalance in rotation of the ring gear can result. An imprecise revolution of the ring gear together with the planet gears can diminish the power transmission performance of the overall drive train.

It is therefore an object of the present invention to provide an improved hub transmission, by which any undesirable imbalance in the rotation of the ring gear can be substantially reduced.

According to the present invention a hub transmission for a bicycle is provided with a drive member and a hub body each of which is mounted to rotate about a hub axle. A planetary gear mechanism is interposed between the drive member and the hub body for transmitting torque from the drive member to the hub through multiple rotational force transmission paths. The planetary gear mechanism includes at least one planet gear arranged to engage with at least one ring gear and a sun gear. A change speed mechanism including at least one clutch is also provided for selecting one of the rotational force transmission paths. A ring gear guide ring is provided between the ring gear and the hub body to ensure uniform rotation of the ring gear in operation.

In one embodiment, the ring gear guide ring is disposed on an inner peripheral surface of the hub body such that a space is left between the ring gear guide ring and an outer peripheral surface of the ring gear. The space between the ring gear guide ring and the ring gear is sufficient to allow the ring gear to rotate without contacting the ring gear guide ring, when the ring gear is precisely in balance. On the other hand, the spacing is small enough that a slight imbalance or wobbling of the ring gear will lead to engagement with the ring gear guide ring in a manner that the ring gear is prevented from imbalanced motion.

In a further embodiment, the ring gear guide ring is disposed on outer peripheral surface of the ring gear, such that a spacing is defined between the outer surface of the ring gear guide ring and an inner peripheral surface of the hub body. The spacing itself is defined as above, namely such that a true or precise rotation of the ring gear is allowed, while a larger deviation from a smooth running which would lead to wobbling is prevented.

Further objects and advantages of the invention can be taken from the following description of embodiments in conjunction with the drawings.

Fig. 1 shows a first embodiment of a 3-speed hub transmission according to the present invention, where the ring gear guide ring is disposed on an inner peripheral surface of the hub body.

Fig. 2 shows an enlargement of the embodiment of Fig. 1 indicating the mounting of the ring gear guide ring.

Fig. 3 shows a second embodiment of a hub transmission according to the present invention, where the ring gear guide ring is disposed on an outer peripheral surface of the ring gear.

Fig. 4 shows an enlargement of the embodiment of Fig. 3 indicating the mounting of the ring gear guide ring.

Fig. 5 shows a further embodiment of the present invention employed in a 7-speed hub transmission.

Embodiments of the present invention are explained more fully in the following in conjunction with the drawings.

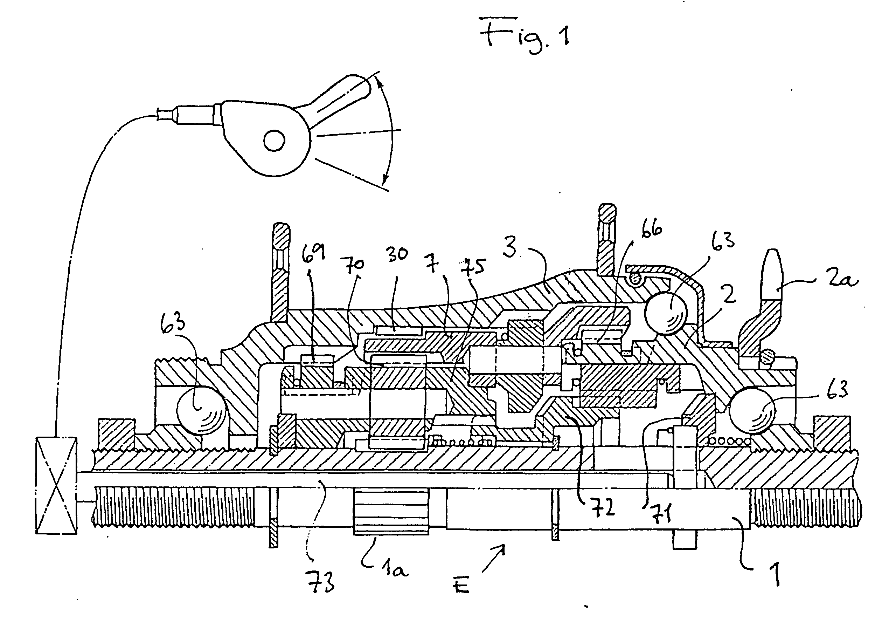

Fig. 1 illustrates a 3-speed hub transmission according to a first embodiment, where a hub axle 1 is to be fixed to a bicycle frame (not shown). A drive member 2 and a hub body 3 are rotatably supported on the hub axle 1 through bearings 63. The drive member 2 receives drive rotation from a chain sprocket 2a and transmits the torque to the hub body 3 in three speeds, for example high, intermediate and low speeds, through various transmission paths defined by planet gear mechanisms. A change speed control mechanism E is provided with first and second clutches 71, 72 actuated by a control rod 73.

A first planetary gear mechanism arranged to engage with planetary gear 70 mounted on a planetary gear carrier 75. The planetary gear 70, depending on engagement of the clutches 71 and 72, revolves about an axis of the carrier 75 upon rotation of the carrier 75. The planet gear 70 is also meshed with a sun gear 1a fixed to the hub axle 1.

As an example of the transmission path for the low speed gear, the torque of the drive member 2 is transmitted to the hub body 3 through the first transmission pawls 66, the ring gear 7, the planet gear 70, the carrier 75 and the transmission pawls 69.

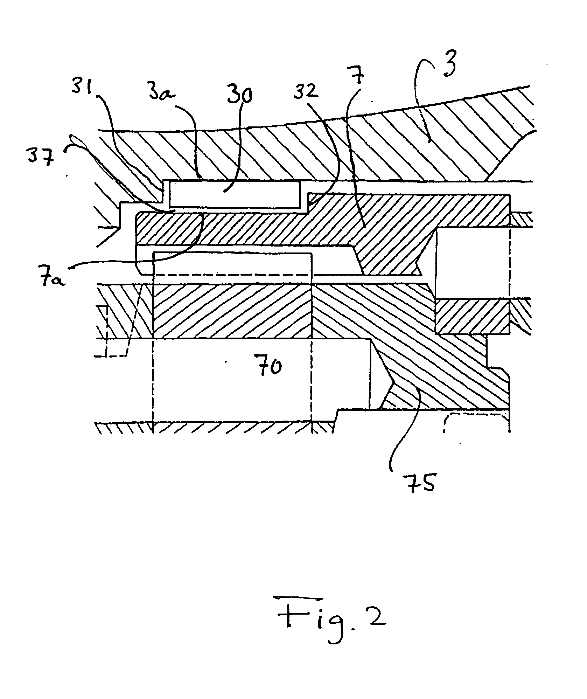

When the axial extension of the ring gear 7 is long and high loads result in operation, some deviation in rotation or a wobbling of the ring gear 7 about the hub axle 1 can occur. This can happen particularly when the low speed transmission path is selected, where higher torques arise. In this first embodiment of the present invention, a ring gear guide ring 30 in annular form is mounted to an inner peripheral surface of the hub body 3 as illustrated in Fig. 1 and in more detail in Fig. 2. In this embodiment, the guide ring 30 is formed as a separate collar-like piece disposed to abut against the inner peripheral surface 3a of the hub body 3.

As seen in Fig. 2, an inner peripheral surface of the ring gear guide ring 30 is forms a spacing 37 with an outer peripheral surface 7a of the ring gear 7. The spacing 37 is designed to allow smooth rotation of the ring gear 7 without contacting the ring gear guide ring 30 in normal operation. On the other hand, when high or nonuniform loads are applied to the ring gear 7, which would cause a wobbling of the ring gear 7, the outer peripheral surface 7a of the ring gear 7 will contact the ring gear guide ring 30, whereby a substantial uniform running of the ring gear 7 is guaranteed.

The spacing 37 will normally be in the range of 0.15 to 0.5 mm, preferably in the range of 0.15 to 0.35 mm. The material of the ring gear guide ring 30 may be a metal, for example brass. In instances where heating does not arise due to braking, the ring gear guide ring 30 may also be formed of a resin material.

In the embodiment shown in Fig. 2, the ring gear guide ring 30 is mounted to an inner peripheral surface 3a of the hub body 3 by means of a press-fit connection. In other embodiments, the ring gear guide ring 30 could also be bearing-mounted, for example with roller or pin bearings.

Again referring to Fig. 2, the ring gear guide ring 30 is secured against axial movement in either direction by appropriately defined stops. A first lateral stop 31 is formed on the internal surface of the hub body 3 to prevent axial movement to the left in Fig. 2, while a second lateral stop 32 is formed on the ring gear 7 to prevent axial movement to the right in Fig. 2. With the use of such lateral stops 31, 32, the axial movement of the ring gear guide ring 30 can be confined to a small axial range. This measure is of particular importance when the ring gear guide ring 30 is bearing-mounted.

As seen in Figs. 1 and 2, the ring gear 7 is mounted to the carrier 75 (at the right in Fig. 2) so as to rotate about the hub axle 1. When wobbling does occur, it is most pronounced at the free end of the ring gear 7 to the left in Fig. 2 or more generally at the end of the ring gear opposed to the drive member 2. Consequently, the ring gear guide ring 30 is disposed externally of the ring gear 7 adjacent to the axial end of the ring gear 7 opposed to the drive member 2. The ring gear guide ring 30 is also be disposed at an axial position of the ring gear 7 which is opposite to the region where at least one planet gear 70 internally engages with the ring gear 7. In this manner, the ring gear guide ring 30 is disposed in the region of the planet gear 70, where the forces arise which could cause imbalance in the rotation of the ring gear.

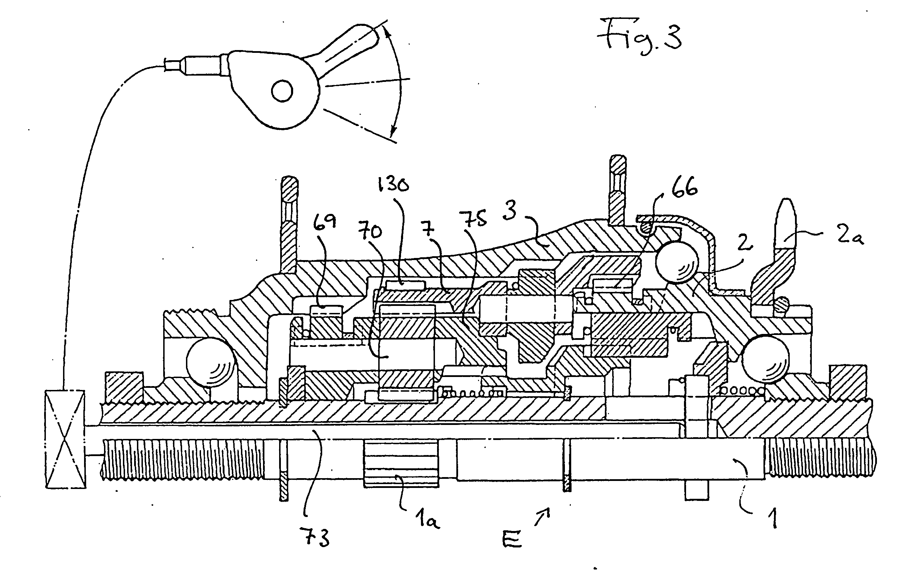

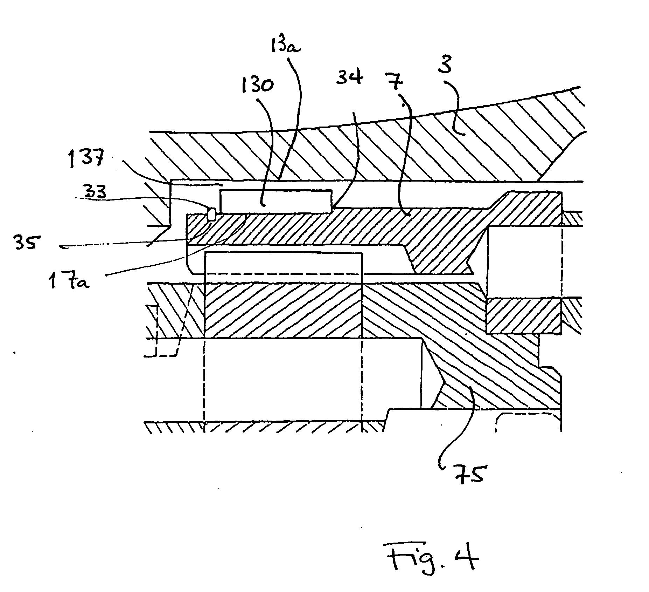

A second embodiment of the present invention is illustrated in Figs. 3 and 4, where the elements in common with Figs. 1 and 2 are indicated with the same reference numerals. In this embodiment, the ring gear guide ring 130 is disposed on an outer peripheral surface 17a of the ring gear 7.

As in the previous embodiment, the spacing 137 is provided such that the ring gear 7 in normal conditions undergoes uniform rotation without contact being made between the ring gear guide ring 130 and the inner peripheral surface 13a of the hub body. On the other hand, the spacing is such that when irregular forces arise and wobbling occurs, the ring gear guide ring 130 will contact the inner peripheral surface 13a to minimize wobbling.

As in the previous embodiment, the ring gear guide ring 130 may be composed of a metal, preferably brass, or in other applications may be formed of a resin material. Normally, the ring gear guide ring 130 will be press-fit to the outer peripheral surface 17a of the ring gear 7, however can also be mounted with bearings, for example roller or pin bearings.

To prevent axial movement of the ring gear guide ring 130, a lateral stop 34 is formed in the ring gear 7 on the side of the ring gear guide ring 130 closest to the drive member 2. As seen in Fig. 4, the lateral stop 34 prevents movement of the ring gear guide ring 130 to the right or in the direction of the drive member 2.
Axial movement in the opposite direction, away from the drive member 2, is prevented by a stopper element 33 as illustrated in Fig. 4. The stopper element 33 can be any form of raised projection extending from the external peripheral surface 17a of the ring gear 7. Preferably, the stopper element 33 comprises a spring element disposed in a groove 35 formed on the outer peripheral surface 17a of the ring gear 7. With this arrangement, the ring gear guide ring 130 can be passed onto the outer peripheral surface 17a of the ring gear 7 and thereafter the spring element, for example a round or square spring, can be placed in the groove 35.

As in the above first embodiment, the ring gear guide ring 130 in this embodiment is provided at an axial end of the ring gear 7, more particularly the axial end to the left in Fig. 4 or the end of the ring gear 7 opposite to the drive member 2. As also can be seen in Fig. 4, the ring gear guide ring 130 is disposed externally of the ring gear 7 in a region opposite the internal region of the ring gear where the planet gear 70 engages the ring gear 7.

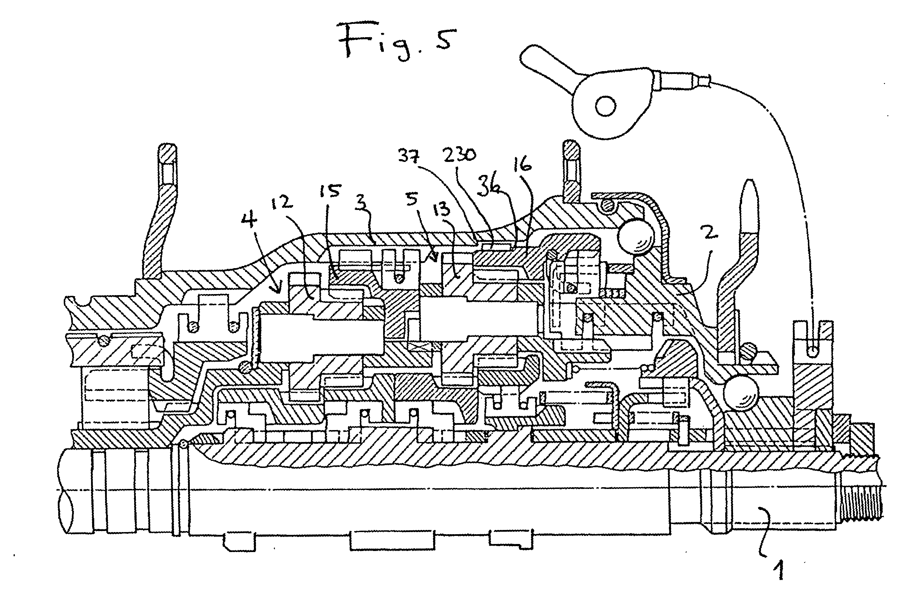

A third embodiment of the present invention is illustrated in Fig. 5, which shows a 7-speed hub transmission. Drive member 2 transmits rotational force to a hub body 3 rotatably supported on the hub axle 1. The drive transmission train from the drive member 2 to the hub body 3 includes a first planetary gear mechanism 4 including a ring gear 15. The hub transmission in Fig. 5 also includes a second planetary gear mechanism 5 with a second ring gear 16. The ring gears 15 and 16 engage with planet gears 12 and 13, respectively.

In this embodiment, a ring gear guide ring 230 is provided on an external peripheral surface of the ring gear 16. In this case, axial movement of the ring gear guide ring 230 in the direction toward the drive member 2 is provided by a lateral stop 36 in the ring gear 16. Axial movement in the direction away from the drive member 2 is prevented by a lateral stop 37 formed on an internal peripheral surface of the hub body 3.

As in the previous embodiments, the spacing between the outer peripheral surface of the ring gear guide ring 230 and the inner peripheral surface of the hub body 3 is provided such that under smooth running conditions, the guide ring 230 does not contact the internal peripheral surface of the hub body 3. The spacing however is small enough that any deviation from smooth running or any wobbling of the ring gear 16 is corrected by contact of the ring gear guide ring 230 with the internal peripheral surface of the hub body 3.

It will be understood that the above described embodiments are presented only for illustration purposes, while the invention itself is not limited to these embodiments and modifications are possible which fall under the scope of the present invention as defined by the appended claims.

## Claims

1. A hub transmission for a bicycle comprising;
a hub axle (1);
a drive member (2) and a hub body (3) rotatably supported on said hub axle (61);
a planetary gear mechanism (7, 70) interposed between said drive member (2) and said hub body (3) for transmitting rotational force from the drive member (2) to the hub body (3) through multiple rotational force transmission paths, said planetary gear mechanism comprising at least one planet gear (70) arranged to engage with at least one ring gear (7);
a change speed control mechanism (E) comprising at least one clutch for selecting the rotational force transmission path; and **characterized by**
a ring gear guide ring (30, 130) arranged between the ring gear (7) and the hub body (3), so as to define a spacing therebetween.

2. Hub transmission according to claim 1, where the ring gear guide ring (30) is disposed on an inner peripheral surface of the hub body, such that the spacing (37) is defined between the ring gear guide ring (30) and an outer peripheral surface of the ring gear (7).

3. Hub transmission according to claim 1 or 2, wherein axial movement of the ring gear guide ring (30) in the direction of the hub axle is prevented by a first lateral stop (31) formed on the hub body (3) and a second lateral stop (32) formed on the ring gear (7).

4. Hub transmission of any one of the claims 1 to 3, wherein the spacing (37) between the ring gear guide ring (30) and the outer peripheral surface of the ring gear (7) is sufficient to allow smooth running of the ring gear (7) while substantially preventing wobbling of the ring gear (7).

5. Hub transmission according to claim 1, wherein the ring gear guide ring (130) is disposed on an outer peripheral surface (17a) of the ring gear (7) such that a spacing (137) is defined between the ring gear guide ring (130) and an internal peripheral surface (13a) of the hub body (3).

6. Hub transmission according to claim 5, wherein axial movement of the ring gear guide ring (130) in the direction of the hub axle (1) is prevented by a stopper element (33) formed at one side of the ring gear guide ring (130) and a lateral stop (34) formed on the ring gear (7) at the other side of the ring gear guide ring (130).

7. Hub transmission of claim 6, wherein the stopper element (33) comprises a round or square spring element disposed in a groove (35) formed on the outer peripheral surface (17a) of the ring gear (7).

8. Hub transmission of claim 6, wherein the stopper element comprises a lateral stop 37 formed on the internal peripheral surface of the hub body (3).

9. Hub transmission according to any one of the claims 1 to 8, wherein the ring gear guide ring (30, 130) is disposed externally of the ring gear (7) at an axial position opposite a region where said at least one planet gear (70) internally engages the ring gear (7).

10. Hub transmission according to any one of the claims 1 to 8, wherein the ring gear guide ring (30, 130) is disposed externally of the ring gear (7) adjacent an axial end of the ring gear (7) opposed to the drive member (2).

11. Hub transmission according to any one of the claims 1 to 10, wherein the material of the ring gear guide ring (30, 130) is a metal, preferably brass, or a resin material.

12. Hub transmission according to any one of claim 1 to 10, wherein the ring gear guide ring (30, 130) is mounted in a press fit connection.

13. Hub transmission of any one of the claims 1 to 10, wherein said ring gear guide ring (30, 130) is bearing mounted to said internal hub body surface or to said external ring gear surface.

14. Hub transmission of any one of the claims 1 to 13, wherein the planetary gear mechanism comprises two ring gears (15, 16) and associated planet gears (12, 13) and wherein at least one ring gear guide ring (230) is arranged between one of the ring gear (15, 16) and an internal peripheral surface of the hub body (3).

## Patentansprüche

1. Nabenschaltung für ein Fahrrad, welche;
eine Nabenachse (1);
einen Antriebskörper (2) und einen auf dieser Nabenachse (61) drehbar gelagerten Nabenkörper (3);
einen zwischen diesem Antriebskörper (2) und diesem Nabenkörper (3) eingefügten Planetengetriebemechanismus (7, 70), welcher über mehrere Drehmomentübertragungswege ein Drehmoment vom Antriebskörper (2) auf den Nabenkörper (3) überträgt, wobei dieser Planetengetriebemechanismus wenigstens ein Planetenrad (70) aufweist, welches in wenigstens ein Hohlrad (7) eingreift;
einen Gangschaltmechanismus (E) mit wenigstens einer Kupplung zur Auswahl des Drehmomentübertragungswegs;
**gekennzeichnet durch**
einen Hohlradführungsring (30, 130), angeordnet zwischen dem Hohlrad (7) und dem Nabenkörper (3), welcher dazwischen einen Freiraum bestimmt.

2. Nabenschaltung gemäß Anspruch 1, wobei der Hohlradführungsring (30) auf der inneren Umfangsfläche des Nabenkörpers angeordnet ist, so dass der Freiraum (37) zwischen dem Hohlradführungsring (30) und einer äußeren Umfangsfläche des Hohlrads (7) bestimmt wird.

3. Nabenschaltung gemäß Anspruch 1 oder 2, wobei eine axiale Bewegung des Hohlradführungsrings (30) in Richtung der Nabenachse durch einen am Nabenkörper (3) angeformten ersten seitlichen Anschlag (31) sowie einen am Hohlrad (7) angeformten zweiten seitlichen Anschlag (32) unterbunden wird.

4. Nabenschaltung gemäß einem der Ansprüche 1 bis 3, wobei der Freiraum (37) zwischen dem Hohlradführungsring (30) und der äußeren Umfangsfläche des Hohlrads (7) so bemessen ist, dass einerseits ein sanfter Lauf des Hohlrads (7) möglich ist und andererseits ein Taumeln des Hohlrads (7) im Wesentlichen vermieden wird.

5. Nabenschaltung gemäß Anspruch 1, wobei der Hohlradführungsring (130) an der äußeren Umfangsfläche (17a) des Hohlrads (7) so angeordnet ist, dass der Freiraum (137) zwischen dem Hohlradführungsring (130) und einer inneren Umfangsfläche (13a) des Nabenkörpers (3) bestimmt ist.

6. Nabenschaltung gemäß Anspruch 5, wobei eine axiale Bewegung des Hohlradführungsrings (130) entlang der Nabenachse (1) durch ein an einer Seite des Hohlradführungsrings (130) angeordnetes Anschlagelement (33) und einen auf der anderen Seite des Hohlradführungsrings (130) am Hohlrad (7) angeformten seitlichen Anschlag (34) unterbunden wird.

7. Nabenschaltung gemäß Anspruch 6, wobei das Anschlagelement (33) durch ein rundes oder eckiges Federelement gebildet wird, welches in einer Nut (35) in der äußeren Umfangsfläche (17a) des Hohlrads (7) angeordnet ist.

8. Nabenschaltung gemäß Anspruch 6, wobei das Anschlagelement durch einen seitlichen Anschlag 37 auf der inneren Umfangsfläche des Nabenkörpers (3) gebildet wird.

9. Nabenschaltung nach einem der Ansprüche 1 bis 8, wobei der Hohlradführungsring (30, 130) außerhalb des Hohlrads (7) an einer axialen Position gegenüber dem Bereich angeordnet ist, wo sich dieses wenigstens eine Planetenrad (70) im Eingriff mit dem Hohlrad (7) befindet.

10. Nabenschaltung nach einem der Ansprüche 1 bis 8 wobei der Hohlradführungsring (30, 130) außerhalb des Hohlrads (7) angeordnet ist, benachbart zu einem axialen Ende des Hohlrads (7), welches dem Antriebskörper (2) abgewandt ist.

11. Nabenschaltung nach einem der Ansprüche 1 bis 10, wobei der Werkstoff des Hohlradführungsrings (30, 130) metallisch ist, vorzugsweise Messing, oder ein Kunstharzwerkstoff.

12. Nabenschaltung nach einem der Ansprüche 1 bis 10, wobei der Hohlradführungsring (30, 130) mit einem Presssitz montiert ist.

13. Nabenschaltung nach einem der Ansprüche 1 bis 10, wobei dieser Hohlradführungsring (30, 130) auf der Innenfläche des Nabenkörpers oder auf der Außenfläche des Hohlrads wälzgelagert ist.

14. Nabenschaltung nach einem der Ansprüche 1 bis 13, dessen Planetengetriebemechanismus zwei Hohlräder (15, 16) und zugehörige Planetenräder (12, 13) aufweist und wobei wenigstens ein Hohlradführungsring (230) zwischen einem der Hohlräder (15, 16) und einer inneren Umfangsfläche des Nabenkörpers (3) angeordnet ist.

## Revendications

1. Transmission intégrée dans le moyeu pour une bicyclette comportant :
un axe de moyeu (1) ;
un élément d'entraînement (2) et un corps de moyeu (3) supportés de façon rotative sur ledit axe de moyeu (1) ;
un mécanisme d'engrenage planétaire (7, 70) interposé entre ledit élément d'entraînement (2) et ledit corps de moyeu (3) afin de transmettre une force de rotation de l'élément d'entraînement (2) au corps de moyeu (3) par l'intermédiaire de multiples passages de transmission de force de rotation, ledit mécanisme d'engrenage planétaire comportant au moins un pignon planétaire (70) prévu pour engager au moins une couronne dentée (7) ;
un mécanisme de commande de changement de vitesse (E) comportant au moins un embrayage destiné à sélectionner le passage de transmission de force de rotation ; et
**caractérisée par**
une bague de guidage de couronne dentée (30, 130) disposée entre la couronne dentée (7) et le corps de moyeu (3), de façon à définir un espacement entre eux.

2. Transmission intégrée dans le moyeu selon la revendication 1, dans laquelle la bague de guidage de couronne dentée (30) est disposée sur une surface périphérique interne du corps de moyeu, de telle sorte que l'espacement (37) est défini entre la bague de guidage de couronne dentée (30) et une surface périphérique externe de la couronne dentée (7).

3. Transmission intégrée dans le moyeu selon la revendication 1 ou 2, dans laquelle un mouvement axial de la bague de guidage de couronne dentée (30) dans la direction de l'axe de moyeu est empêché par une première butée latérale (31) formée sur le corps de moyeu (3) et une deuxième butée latérale (32) formée sur la couronne dentée (7).

4. Transmission intégrée selon l'une quelconque des revendications 1 à 3, dans laquelle l'espacement (37) entre la bague de guidage de couronne dentée (30) et la surface périphérique externe de la couronne dentée (7) est suffisant pour permettre un fonctionnement en douceur de la couronne dentée (7) tout en empêchant de manière substantielle une oscillation de la couronne dentée (7).

5. Transmission intégrée dans le moyeu selon la revendication 1, dans laquelle la bague de guidage de couronne dentée (130) est disposée sur une surface périphérique externe (17a) de la couronne dentée (7) de telle sorte qu'un espacement (137) est défini entre la bague de guidage de couronne dentée (130) et une surface périphérique interne (13a) du corps de moyeu (3).

6. Transmission intégrée dans le moyeu selon la revendication 5, dans laquelle un mouvement axial de la bague de guidage de couronne dentée (130) dans la direction de l'axe de moyeu (1) est empêché par un élément de butée (33) formée sur un côté de la bague de guidage de couronne dentée (130) et une butée latérale (34) formée sur l'autre côté de la bague de guidage de couronne dentée (130).

7. Transmission intégrée dans le moyeu selon la revendication 6, dans laquelle l'élément de butée (33) comporte un élément de ressort rond ou carré disposé dans une rainure (35) formée sur la surface périphérique externe (17a) de la couronne dentée (7).

8. Transmission intégrée dans le moyeu selon la revendication 6, dans laquelle l'élément de butée comporte une butée latérale (37) formée sur la surface périphérique interne du corps de moyeu (3).

9. Transmission intégrée selon l'une quelconque des revendications 1 à 8, dans laquelle la bague de guidage de couronne dentée (30, 130) est disposée à l'extérieur de la couronne dentée (7) dans une position axiale opposée à une zone où ledit au moins un pignon planétaire (70) engage intérieurement la couronne dentée (7).

10. Transmission intégrée selon l'une quelconque des revendications 1 à 8, dans laquelle la bague de guidage de couronne dentée (30, 130) est disposée à l'extérieur de la couronne dentée (7) de façon adjacente à une extrémité axiale de la couronne dentée (7) opposée à l'élément d'entraînement (2).

11. Transmission intégrée selon l'une quelconque des revendications 1 à 10, dans laquelle la matière de la bague de guidage de couronne dentée (30, 130) est un métal, de préférence du laiton, ou une résine.

12. Transmission intégrée selon l'une quelconque des revendications 1 à 10, dans laquelle la bague de guidage de couronne dentée (30, 130) est montée avec un ajustement serré.

13. Transmission intégrée selon l'une quelconque des revendications 1 à 10, dans laquelle ladite bague de guidage de couronne dentée (30, 130) est montée avec palier sur ladite surface de corps de moyeu interne ou sur ladite surface de couronne dentée externe.

14. Transmission intégrée selon l'une quelconque des revendications 1 à 13, dans laquelle le mécanisme d'engrenage planétaire comprend deux couronnes dentées (15, 16) et des pignons planétaires (12, 13) associés et dans laquelle au moins une bague de guidage de couronne dentée (230) est prévue entre l'une des couronnes dentées (15, 16) et une surface périphérique interne du corps de moyeu (3).
